Europäisches Patentamt

European Patent Office

Office européen des brevets

(11) Veröffentlichungsnummer: **0 338 248**

**A1**

(12) **EUROPÄISCHE PATENTANMELDUNG**

(21) Anmeldenummer: 89104612.0

(22) Anmeldetag: 15.03.89

(51) Int. Cl.⁴: **F16D 1/08**

(30) Priorität: 17.03.88 DE 3809027
14.06.88 DE 3820189

(43) Veröffentlichungstag der Anmeldung:
25.10.89 Patentblatt 89/43

(84) Benannte Vertragsstaaten:
**DE ES FR GB IT NL SE**

(71) Anmelder: **Backers, Heinz**
**Auf dem Bült 42**
**D-4477 Twist(DE)**

(72) Erfinder: **Backers, Heinz**
**Auf dem Bült 42**
**D-4477 Twist(DE)**

(74) Vertreter: **Möller, Friedrich, Dipl.-Ing. et al**
**Meissner, Bolte & Partner Patentanwälte**
**Hollerallee 73**
**D-2800 Bremen 1(DE)**

(54) **Vorrichtung zur drehmomentübertragenden Verbindung mehrerer (Maschinen-)Elemente.**

(57) Zur Verbindung von (Maschinen-)Elementen, insbesondere einer Nabe (22) eines Kettenrades (20), mit einer Welle ist die Nabe (22) des anzutreibenden bzw. des als Antrieb dienenden Maschinenelements (Kettenrad 20) als Schlingfeder (21) ausgebildet. Diese läßt sich einfach ohne zusätzlichen Platzbedarf durch eine umlaufende Nut (23) an der Nabe (22) herstellen. Die Kraftübertragung erfolgt bei dieser Schlingfeder (21) nach dem Seilreibungsprinzip, wodurch mit zunehmender Belastung auch zunehmende Drehmomente übertragbar sind.

Die Vorrichtung eignet sich besonders als Wellen-Naben-Verbindung, aber auoh zur Verbindung von Werkzeugen (Fräsern etc.) mit einer Antriebsspindel einer entsprechenden Werkzeugmaschine. Schließlich kann die Vorrichtung auch zur Verbindung gegenüberliegender Enden mehrere Wellen verwendet werden.

Fig. 1

## Vorrichtung zur drehmomentübertragenden Verbindung mehrerer (Maschinen-)Elemente

Die Erfindung betrifft eine Vorrichtung zur drehmomentübertragenden Verbindung mehrerer (Maschinen-)Elemente gemäß dem Oberbegriff des Anspruchs 1.

Bei der Erfindung geht es in erster Linie um die Schaffung einer Verbindung zur Übertragung eines Drehmoments von einer angetriebenen Welle auf eine darauf sitzende Riemenscheibe, ein Zahnrad, eine Kupplung oder dgl. und umgekehrt, also eine sogenannte Wellen-Naben-Verbindung. Die erfindungsgemäße Vorrichtung kann aber auch verwendet werden zum Einspannen und Antrieb eines Werkzeugs, nämlich eines Fräsers bzw. eines Bohrers, durch eine Arbeitsspindel einer Werkzeugmaschine.

Üblicherweise erfolgt vor allem eine Verbindung der Nabe einer Riemenscheibe, eines Zahnrades oder dgl. mit einer Welle formschlüssig durch Paßfedern bzw. Querstifte. Die Nachteile dieser Verbindungselemente, insbesondere die hierdurch hervorgerufenen Schwächungen, sind hinlänglich bekannt.

Um den Nachteilen dieser bekannten formschlüssigen Verbindungsorgane aus dem Wege zu gehen, sind ferner bereits reibschlüssige Verbindungen aus Spannorganen bekannt. Beispielsweise werden zur reibschlüssigen Verbindung einer Welle mit der Nabe eines Zahnrades oder dgl. sogenannte Ringfeder-Spannverbindungen verwendet. Diese bestehen aus zwei oder mehreren auf entgegengesetzten schiefen Ebenen relativ zueinander verschiebbaren Ringen. Durch ein Zusammenschieben dieser Ringe erfolgt eine elastische Verformung derselben, derart, daß sie die Nabe gegenüber der Welle verspannen. Diese bekannten Spannelemente sind in mehrfacher Hinsicht nachteilig. Zum einen benötigen sie mindestens eine paßgenaue Ausnehmung in der Nabe, die nicht nur aufwendig herstellbar ist, darüber hinaus aufgrund ihres Raumbedarfs eine relativ große Wandstärke der Nabe erfordert. Darüber hinaus besteht die Gefahr, daß die durch Festschrauben erfolgende Verspannung der Ringe allmählich verlorengeht, wenn nämlich, hervorgerufen durch Schwingungen oder dgl., die zur Vorspannung dienenden Schrauben sich mit der Zeit lösen. Schließlich sind die bekannten Spannelemente relativ aufwendig in ihrer Herstellung.

Hiervon ausgehend, liegt der Erfindung die Aufgabe zugrunde, eine Vorrichtung der eingangs genannten Art dahingehend weiterzuentwickeln, daß ihr Spannorgan praktisch keinen zusätzlich Platzbedarf erfordert und darüber hinaus sowohl zuverlässig als auch einfach herstellbar ist.

Diese Aufgabe wird durch eine Vorrichtung gemäß Anspruch 1 gelöst. Durch die Ausbildung des Spannorgans als eine Schlingfeder wird erreicht, daß das zu übertragende Drehmoment nach dem Seilreibungsprinzip übertragen wird. Durch die elastischen Eigenschaften der Schlingfeder schlingt sich diese mit zunehmender Belastung immer fester um die Welle bzw. das Werkzeug, wodurch bei zunehmender Belastung auch die Reibung zwischen der Schlingfeder und dem Werkzeug bzw. der Welle steigt. Die Kraftübertragungsfähigkeit dieser Vorrichtung nimmt somit etwa proportional zur Belastung zu, wodurch im Gegensatz zu bekannten Ringfeder-Spannelementen keine unnötig hohen Vorspannungen erforderlich sind; vielmehr sich die Verspannung der Vorrichtung gegenüber der Welle bzw. dem Werkzeug den Betriebsbedingungen anpaßt.

Darüber hinaus verfügt das als Schlingfeder ausgebildete Spannorgan der erfindungsgemäßen Vorrichtung aufgrund seiner federnden Eigenschaften über stoßdämpfende Wirkungen. Lastschwingungen werden dadurch größtenteils kompensiert. Weiterhin wirkt sich vorteilhaft bei der erfindungsgemäßen Vorrichtung die Tatsache aus, daß am Anfang sich die Schlingfeder erst elastisch verformen muß, bevor ein entsprechend hohes Drehmoment übertragen werden kann. Somit wird besonders bei stoßförmiger Kraftaufbringung (z.B. beim Anfahren) ein kurzfristiges Durchrutschen gewährleistet, das dazu beiträgt, Belastungsspitzen abzubauen. Dadurch wird beispielsweise ein Anfahrvorgang schonender, aber zugleich auch eine Überlastung der Vorrichtung wirkungsvoll vermieden.

Zweckmäßigerweise verfügt die Schlingfeder über mehrere Windungen. Dadurch lassen besonders hohe Drehmomente übertragen, wobei durch gezielte Auswahl der Windungszahl eine den Anforderungen entsprechende Bemessung der Vorrichtung problemlos möglich ist.

Erfindungsgemäß ist ein Ende der Schlingfeder mit einem Treibflansch eines Zahnrades, einer Riemenscheibe oder dgl. verbunden, während das gegenüberliegende Ende der Schlingfeder als freies Ende ausgebildet ist, das mit der Welle bzw. dem Werkzeug verbunden ist. Verzugsweise erfolgt die Verbindung des freien Endes der Schlingfeder mit der Welle bzw. dem Werkzeug formschlüssig, indem dieses spannringförmig ausgebildet ist. Dadurch ist eine leichte Montage der Vorrichtung möglich, indem diese lediglich auf die Welle aufgeschoben oder das Werkzeug in die Schlingfeder eingeführt wird. Durch ein anschließendes Vorspannen des Spannrings am freien Ende der Schlingfeder ist gewährleistet, daß die den Spannring bildende letzte Windung der Schlingfeder bei Krafteinleitung nicht oder nur unwesentlich durchrutscht, wodurch sich die anschließenden zum Treibflansch gerichteten Windungen elastisch verformen können zum vollen Aufbau der zur Kraftübertragung erforderlichen Reibkraft. Alternativ ist es denkbar, das freie Ende der Schlingfeder formschlüssig mit der Welle bzw. dem Werkzeug zu verbinden. Eine derartige Verbindung erweist sich dann als vorteilhaft, wenn eine genaue Positionierung der Schlingfeder in Längsrichtung der Welle oder dgl. erforderlich ist bzw. ein Durchrutschen bei Kraftspitzen, insbesondere beim Anfahren, vermieden werden soll. Bei einer solchen formschlüssigen Verbindung der Schlingfeder mit der Welle oder dgl. kann ggf. auf eine reibschlüssige Verspannung der zum freien Ende der Schlingfeder gerichteten Windung verzichtet werden. Ebenso kann ein zur formschlüssigen Verbindung der Schlingfeder mit der Welle, dem Werkzeug oder dgl. dienendes Verbindungsorgan, insbesondere eine Madenschraube oder dgl., gleichzeitig als Scherstift ausgebildet sein.

Nach einem weiteren Vorschlag der Erfindung ist eine Schlingfeder einstückig mit dem Zahnrad, der Zahnriemenscheibe, dem Treibflansch oder dgl. verbunden. Die erfindungsgemäße Vorrichtung ist damit integraler Bestandteil eines Maschinenelements. Hierdurch wird die Montage erheblich vereinfacht.

Darüber hinaus wird bei Zuordnung nur einer Schlingfeder zum Maschinenelement erreicht, daß nur in einer Richtung eine (Drehmoment-)Übertragung von der Welle oder dgl. bzw. auf die Welle erfolgt. Die erfindungsgemäße Vorrichtung übt dadurch eine Art Freilauffunktion aus, die vielfach bei derartigen Wellen-Naben-Verbindungen gewünscht ist.

Alternativ wird vorgeschlagen, zwei Schlingfedern einem einzigen Zahnrad bzw. einer einzigen Zahnriemenscheibe oder dgl. zuzuordnen, indem diese auf gegenüberliegenden Seiten einstückig mit dem Zahnrad bzw. der Zahnriemenscheibe verbunden sind. In diesem Falle ermöglicht die erfindungsgemäße Vorrichtung eine Drehmomentenübertragung in entgegensetzte Richtungen.

Nach einem weiteren Vorschlag der Erfindung ist die Schlingfeder bzw. sind die Schlingfedern so ausgebildet, daß sie gleichzeitig eine Nabe des mit der Welle oder dgl. zu verbindenden Maschinenelements bilden. Dadurch zeichnet sich die erfindungsgemäße Vorrichtung durch besonders geringe Außenabmessungen, also eine kompakte Bauweise, aus.

Weiterhin sind die einzelnen Windungen mit zum freien Ende der Schlingfeder hin allmählich abnehmendem Querschnitt zu versehen. Dadurch sind die einzelnen Windungen der hierin auftretenden Belastung angepaßt, da, ausgehend vom Zahnrad, von der Riemenscheibe oder dgl., zum freien Ende der Schlingfeder hin die Belastung abnimmt. Hierdurch ist eine gleichmäßige Belastung der Schlingfeder über sämtliche Windungen gewährleistet, die Überlastungen und daraus resultierende Ausfälle größtenteils eliminiert. Auch wird durch die mit unterschiedlichen Querschnitten versehenen Windungsgänge erreicht, daß die bei Belastung von diesen auf die Welle bzw. das Werkzeug ausgeübte Flächenpressung annähernd über die gesamte Länge der Schlingfeder konstant ist.

Schließlich wird zur Weiterbildung der erfindungsgemäßen Vorrichtung vorgeschlagen, die zur reibschlüssigen Kraftübertragung erforderliche Vorspannung der Schlingfeder last- und insbesondere lastrichtungsunabhängig konstant vorzunehmen. Zu diesem Zweck ist der Schlingfeder ein Klemmorgan zugeordnet, das die beiden gegenüberliegenden Endwindungen der Schlingfeder gegeneinander verdreht, und zwar in der Windungsrichtung, so daß der Durchmesser der Windungen verringert wird. Durch diese Relativverdrehung der Endwindungen der Schlingfeder schlingen sich die einzelnen Windungen derselben um die anzutreibende bzw. abtreibende Welle, wodurch die zum Antrieb notwendige Reibkraft von der Welle auf die Schlingfeder bzw. umgekehrt übertragbar ist. Da die durch das Klemmorgan auf die Schlingfeder aufgebrachte Vorspannung unabhängig von der Belastung und der Lastrichtung ständig in der Umschlingungsrichtung wirkt, kann bei einer derart ausgebildeten Vorrichtung mit einer einzigen Schlingfeder eine reibschlüssige Drehmomentübertragung in entgegengesetzten Antriebsrichtungen erfolgen. Außerdem kann durch ein entsprechend starkes Verspannen der Schlingfeder durch das Klemmorgan ein nahezu schlupffreies Anfahren erfolgen.

Weitere Unteransprüche betreffen vorteilhafte konstruktive Weiterbildungen der Schlingfeder und des Klemmorgans zur Verspannung derselben.

Bevorzugte Ausführungsbeispiele der Vorrichtung werden nachfolgend anhand der Zeichnung näher erläutert. In dieser zeigen:

Fig. 1 eine an einem Kettenrad angeordnete Schlingfeder,

Fig. 2 eine Ansicht des Kettenrades der Fig. 1 der von der Schlingfeder weggekehrten Seite,

Fig. 3 eine Ansicht des Kettenrades der Fig. 1 vom freien Ende der Schlingfeder aus,

Fig. 4 einen Vertikalschnitt durch das Kettenrad und die daran angeordnete Schlingfeder gemäß der Fig. 1,

Fig. 5 eine Seitenansicht einer alternativen Ausführungsform der an einem Treibflansch angeordneten Schlingfeder,

Fig. 6 eine vergrößert dargestellte Ansicht des freien Endes der Schlingfeder der Fig. 5 im Bereich der Befestigung derselben an einer Welle,

Fig. 7 zwei von gegenüberliegenden Seiten an ein Zahnrad angeflanschte Schlingfedern,

Fig. 8 eine Schlingfederanordnung zur Verbindung zweier Wellen,

Fig. 9 eine alternative Schlingfederanordnung zur Verbindung zweier Wellen,

Fig. 10 eine Schlingfederanordnung zur Einspannung eines Werkzeugs, nämlich eines Fräsers, und

Fig. 11 ein alternatives Ausführungsbeispiel der Vorrichtung in einem Vertikalschnitt,

Fig. 12 eine Stirnansicht der Vorrichtung in Richtung des Pfeiles XII in der Fig. 11, und

Fig. 13 eine Stirnansicht der Schlingfeder in Richtung des Pfeiles XIII in der Fig. 11.

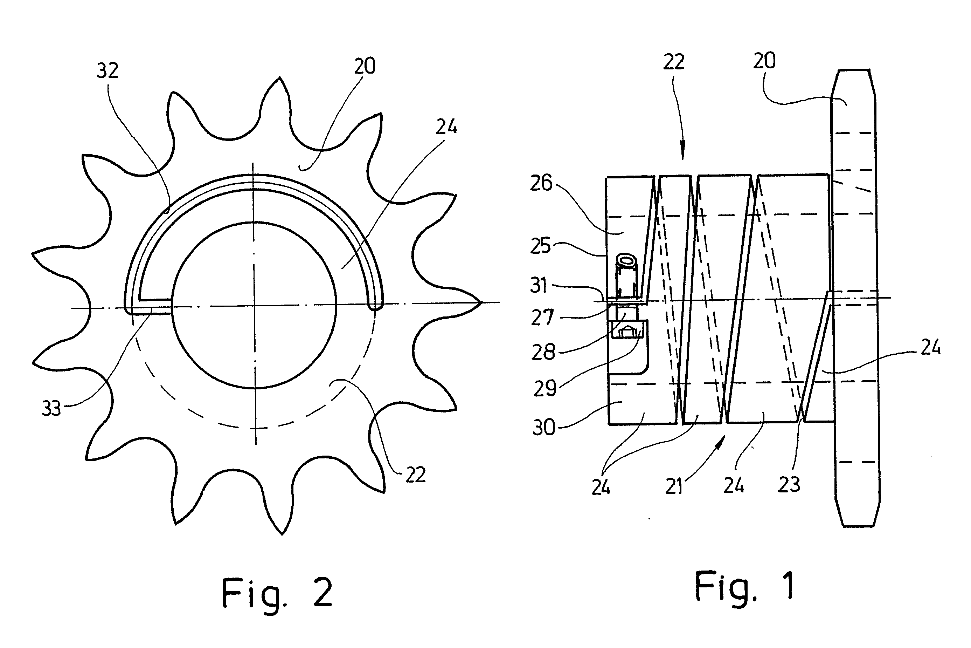

Die Fig. 1 bis 4 zeigen eine Vorrichtung, die zur Übertragung insbesondere von Drehmomenten von einer nicht gezeigten Welle auf ein Kettenrad 20 oder umgekehrt dient. In diesem Ausführungsbeispiel verfügt die Vorrichtung über eine einzige Schlingfeder 21, die einstückig mit dem Kettenrad 20 verbunden ist.

Die Schlingfeder 21 ist im vorliegenden Ausführungsbeispiel gebildet aus einer zylindrischen Nabe 22, die gegenüber einer Seite des Kettenrades 20 hervorragt. Durch eine umlaufende, wendelförmige Nut 23 in der Nabe 22 erhält die Schlingfeder 21 mehrere Windungen 24. Im gezeigten Ausführungsbeispiel verfügt die Schlingfeder 21 über vier Windungen 24.

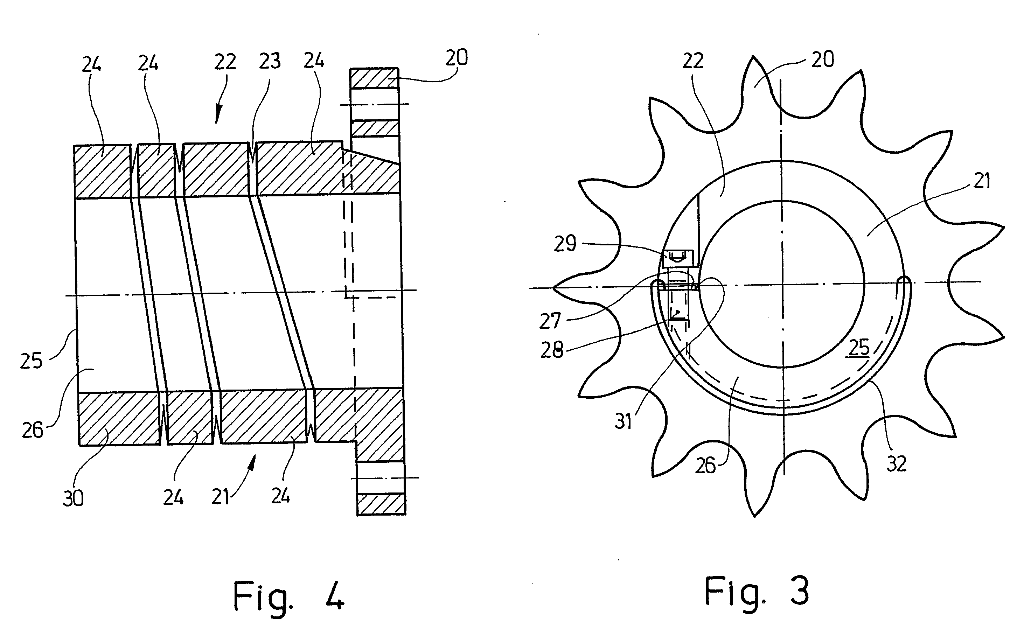

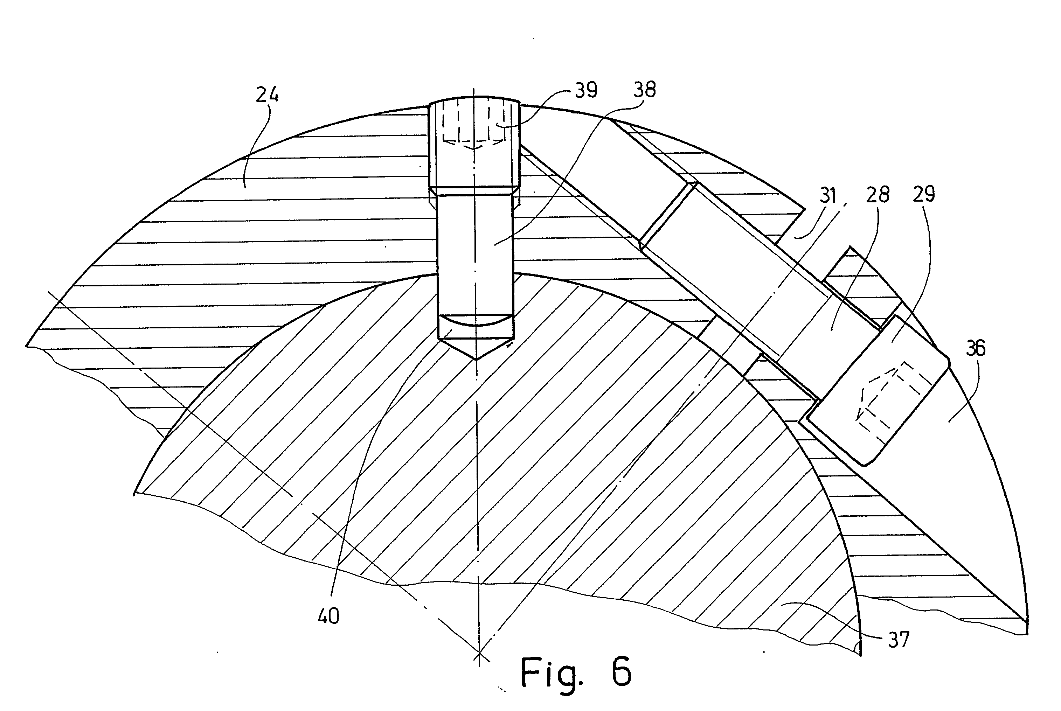

Die einzelnen Windungen 24 verfügen über unterschiedliche Querschnitte, derart, daß, ausgehend vom Kettenrad 20, sich die Querschnitte der Windungen 24 zu einem freien Ende 25 der Schlingfeder 21 hin allmählich verringern, wie deutlich der Fig. 4 entnommen werden kann. Die wendelförmige Nut 23 der Schlingfeder 21 verfügt demnach über eine zum freien Ende 25 hin sich kontinuierlich verringernde Steigung.

Durch die vorstehend beschriebene Bildung der Schlingfeder 21 aus der mit einer umlaufenden Nut 23 versehen zylindrischen Nabe 22 sind die Windungen 24, im Querschnitt gesehen, rechteckförmig, und zwar mit gleichbleibender, in Radialrichtung verlaufender Dicke, aber zum freien Ende 25 hin abnehmender Breite in bezug auf die Längsrichtung der Schlingfeder 21. Alternativ ist es auch denkbar, die Nuten 23 anders als im gezeigten Ausführungsbeispiel nicht mit schmalem rechteckförmigen Querschnitt, sondern mit V-förmigem Querschnitt zu versehen. In diesem Falle verfügen die Windungen 24 über einen annähernd trapezförmigen Querschnitt.

Das freie Ende 25 der Schlingfeder 21 ist in besonderer Weise ausgebildet. Wie insbesondere die Fig. 1 und 3 er kennen lassen, ist nämlich die zum freien Ende 25 gerichtete letzte Windung 24 der Schlingfeder 21 als Spannring 26 ausgebildet. Dazu ist ein freies Windungsende 27 der letzten Windung 24 durch eine Schraube 28 mit der vorhergehenden Windung 24 verspannt. Diese Windung verfügt dazu über eine einen Schraubenkopf 29 der Schraube 28 aufnehmende Verdickung 30, die mit Abstand vor dem freien Windungsende 27 zur Bildung eines in Längsrichtung der Schlingfeder 21 gerichteten Spalts 31 endet. Durch Festziehen der Schraube 28 und Verringerung des Spalts 31 läßt sich so der Durchmesser des Spannrings 26 verringern zum Festspannen des freien Endes 25 der Schlingfeder 21 auf der nicht gezeigten Welle. Dadurch wird einerseits die Vorrichtung in Längsrichtung der Welle festgesetzt, während andererseits das freie Ende 25 der Schlingfeder 21 bei Krafteinleitung in dieselbe gehalten wird, bis sich die Windungen 24 verformt haben zum Aufbau der zur Drehmomentübertragung erforderlichen (Seil-)Reibung zwischen der Welle und der Nabe 22 des Kettenrades 20, nämlich der Schlingfeder 21.

Wie insbesondere den Fig. 2 und 4 entnommen werden kann, wird ein Teil einer Windung 24 an einem dem freien Ende 25 gegenüberliegenden und mit dem Kettenrad 20 verbundenen Ende der Schlingfeder 21 vom Körper des Kettenrades 20 gebildet. Im vorliegenden Ausführungsbeispiel befindet sich so etwa eine halbe Windung 24 im Kettenrad 20. Dazu ist durch eine im vorliegenden Ausführungsbeispiel halbkreisförmige, durchgehende Nut im Kettenrad 20 die hierin gebildete halbe Windung 24 gegenüber dem Außenkörper des Kettenrades 20 abgegrenzt. Dieser Teil der Windung 24 kann somit im Körper des Kettenrades 20 frei federn. Der Austritt der Windung 24 aus dem Kettenrad 20 ist durch einen an einem Ende der halbkreisförmigen Nut 32 radial gerichteten Nutfortsatz 33 gebildet (Fig. 2).

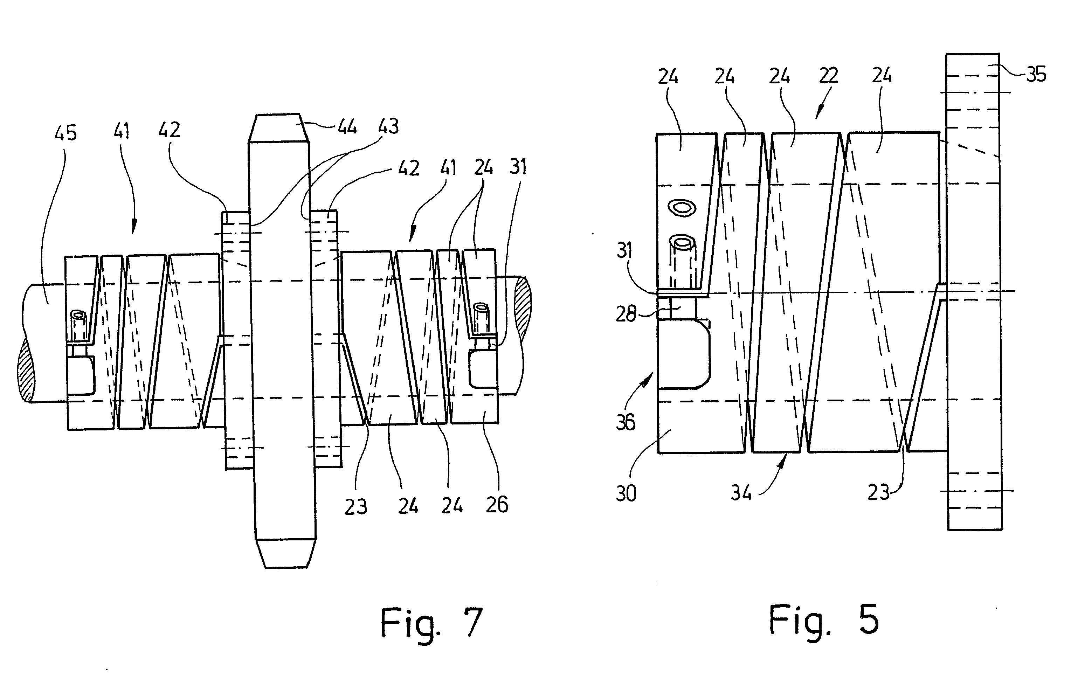

Die Fig. 5 und 6 zeigen ein weiteres Ausführungsbeispiel der Vorrichtung, bei der eine Schlingfeder 34 einstückig mit einem Treibflansch 35 verbunden ist. Die Ausbildung der Schlingfeder 34 und die Verbindung derselben mit dem Treibflansch 35 entspricht dem vorstehend beschriebenen Ausführungsbeispiel. Die Besonderheit der Schlingfeder 34 besteht darin, daß diese einen besonders ausgebildeten Spannring 36, der eine (zusätzliche) formschlüssige Verbindung der Schlingfeder 34 mit einer andeutungsweise in der Fig. 6 dargestellten Welle 37 ermöglicht. Demnach ist zusätzlich zur elastischen Verspannung des Spannrings 36 gegenüber der Welle 37 durch eine analog zum vorstehend beschriebenen Ausführungsbeispiel ausgebildete Schraube 28 eine weitere Schraube, die hier als mit einem Zylinderansatz 38 versehene Madenschraube 39 ausgebildet ist, der Spannring 36 mit der Welle 37 derart verbindbar, daß der Zylinderansatz 38 der Madenschraube 39 radial gerichtet in eine entsprechende Sacklochbohrung 40 in der Welle 37 hineinragt. Hierdurch ist zum einen eine exakte Positionierung der Schlingfeder 34 mit dem Treibflansch 35 gegenüber der Welle 37 möglich, und zwar insbesondere in Axialrichtung der Welle 37. Weiterhin wird durch die formschlüssige Verbindung erreicht, daß beim Anfahren die Schlingfeder 34 gegenüber der Welle 37 nicht rutscht. Durch entsprechende Bemessung der Madenschraube 39, insbesondere des Zylinderansatzes 38 an derselben, kann diese eine Scherstift-Funktion zur Vermeidung von Zerstörungen bei Überbelastungen der Vorrichtung aufweisen.

Bei Verwendung der Madenschraube 39 zur formschlüssigen Verbindung der Schlingfeder 34 mit der Welle 37 kann alternativ zum dargestellten Ausführungsbeispiel auf die Schraube 28 zur reibschlüssigen Verbindung der Schlingfeder 34 mit der Welle 37 verzichtet werden. In diesem Fall erübrigt sich die Verdickung 30 im Bereich der auf das freie Windungsende 27 folgenden Windung 24. Die Schlingfeder 34 wird dadurch kompakter in ihrer Bauweise und auch einfacher herstellbar.

Die vorstehend beschriebenen Ausführungsbeispiele der Vorrichtung ermöglichen die Übertragung eines Drehmoments oder dgl. in nur einer Richtung, nämlich in Windungsrichtung. In diesem Falle werden durch die Antriebskraft die Windungen 24 im sich an die Welle anpressenden Sinne elastisch verformt.

Die Fig. 7 zeigt nun eine Vorrichtung mit zwei Schlingfedern 41. Diese sind - wie beim Ausführungsbeispiel der Fig. 5 und 6 - jeweils mit einem Treibflansch 42 einstükkig verbunden. Die Verbindung der Schlingfedern 41 mit den Treibflanschen 42 sowie die Ausbildung der einzelnen Schlingfedern 41 entspricht wiederum dem Ausführungsbeispiel der Fig. 1 bis 4.

Die Anordnung der beiden Schlingfedern 41 mit den jeweiligen Treibflanschen 42 ist nun derart getroffen, daß zwischen den beiden von den Schlingfedern 41 weggerichteten (glatten) Stirnseiten 43 der Treibflansche 42 ein Zahnrad 44 angeordnet ist. Dieses ist in üblicher Weise, beispielsweise durch nicht dargestellte Schrauben, mit den Treibflanschen 42 verbunden. Durch die beiden Schlingfedern 41 ist hier eine durchgehende Welle 45 geführt.

Durch die beiden hier verwendeten Schlingfedern 41, die entgegengesetzt gerichtet gegenüberliegenden Seiten des Zahnrades 44 zugeordnet sind, wird erreicht, daß je nach Drehrichtung der Welle 45 jeweils eine der beiden Schlingfedern 41 eine Drehmomentübertragung von der Welle 45 auf das Zahnrad 44 oder umgekehrt ermöglicht. Je nach Drehrichtung der Welle 45 erzeugt somit alternativ die eine oder die andere Schlingfeder 41 eine reibschlüssige Verbindung zum jeweiligen Treibflansch 42 und damit zum Zahnrad 44. Die hier gezeigte Vorrichtung kann dadurch in beiden Richtungen ein Drehmoment übertragen.

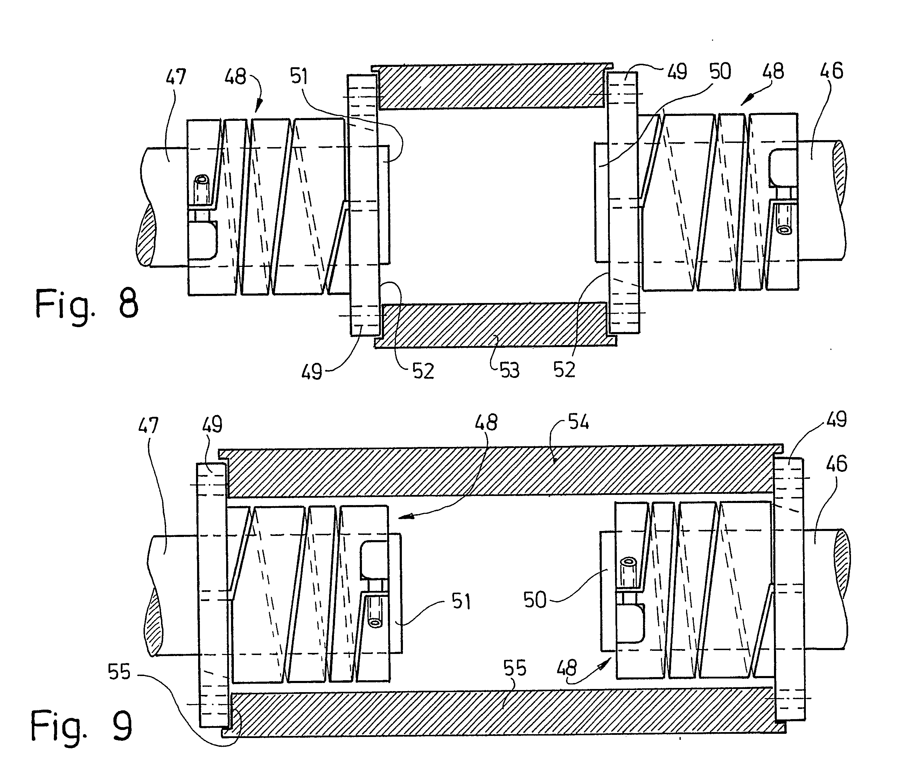

Die Ausführungsbeispiele der Fig. 8 und 9 zeigen eine Vor richtung zur Drehmomentübertragung zwischen zwei Wellen 46 bzw. 47. Beide Vorrichtungen verfügen über zwei Schlingfedern 48, die jeweils an einem Ende einstückig mit einem Treibflansch 49 verbunden sind. Insoweit stimmen die in den Fig. 8 und 9 gezeigten Vorrichtungen mit der Vorrichtung der Fig. 7 überein.

Jede Schlingfeder 48 mit dem ihr zugeordneten Treibflansch 49 ist hierbei einem der sich gegenüberliegenden freien Wellenenden 50 bzw. 51 der beiden zu verbindenden Wellen 46 und 47 zugeordnet. Die den Schlingfedern 48 weggerichteten (glatten) Stirnflächen 52 der Treibflansche 49 sind hier wieder zueinander gerichtet, derart, daß sie parallel mit Abstand zueinander verlaufen.

Verbunden sind, nun die beiden Wellenenden 50 und 51 durch ein etwa zylinderförmiges Verbindungsstück 53 zwischen den einander zugerichteten Stirnflächen 52 der Treibflansche 49. das Verbindungsstück 53 ist dabei durch nicht gezeigte Schrauben mit den Treibflanschen 49 verschraubt. Durch diese Verbindung der beiden Wellen 46 und 47 kann in einer Drehrichtung ein Drehmoment von der einen zur anderen Welle 46 bzw. 47 übertragen werden.

Weiterhin kann im gezeigten Ausführungsbeispiel das Verbindungsstück 53 aus einem elastischen Material bestehen. In diesem Falle ermöglicht es die gezeigte Vorrichtung, geringe Fluchtfehler zwichen den Wellenenden 50 bzw. 51 auszugleichen, während gleichzeitig antriebsbedingte Schwingungen eliminiert werden, bevor sie auf die anzutreibende Welle 46 bzw. 47 vom Verbindungsstück 53 übertragen werden.

Das Ausführungsbeispiel der Fig. 9 unterscheidet sich von demjenigen der Fig. 8 lediglich dadurch, daß die freien Enden 25 der Schlingfedern 48 einander zugerichtet sind, also zu dem jeweiligen Wellenende 50 bzw. 51 weisen. Eine Verbindung mit einem entsprechend langen Verbindungsstück 54 erfolgt hier von den zu den Schlingfedern 48 ragenden kreisringförmigen Stirnflächen 55 der Treibflansche 49 aus.

Die Besonderheit der Vorrichtung dieses Ausführungsbeispiels liegt darin, daß die Schlingfedern 48 sich im Bereich des Verbindungsstückes 54 befinden, von diesem also umgeben und somit geschützt sind. Demzufolge ist das Verbindungsstück 54 in der Fig. 9 entsprechend länger als das relativ kurze Verbindungsstück 53 in der Fig. 8 ausgebildet.

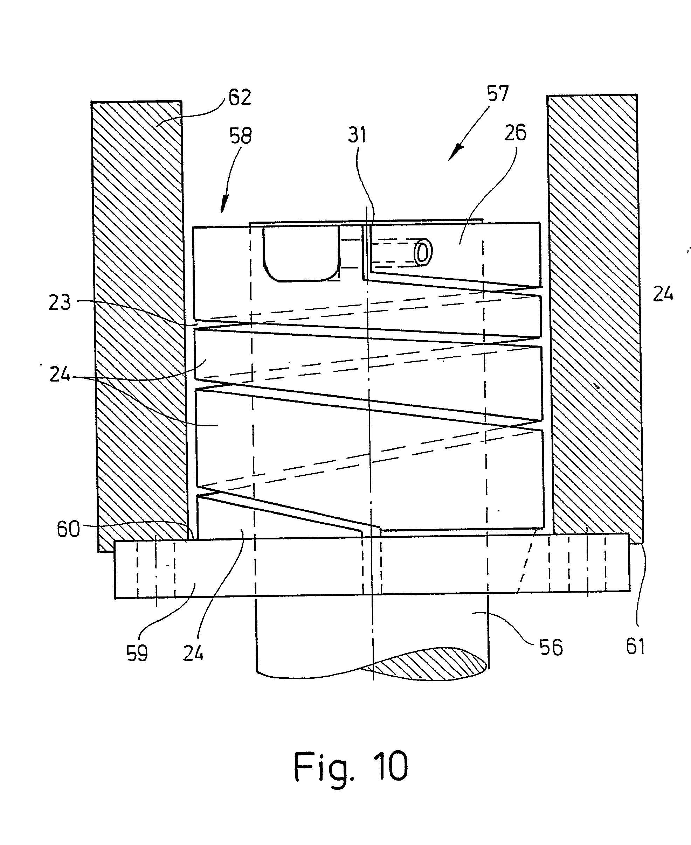

Schließlich zeigt die Fig. 10 eine weitere Verwendung der Vorrichtung, nämlich zum Einspannen eines hier andeutungsweise dargestellten Fräsers 56 in einem Fräskopf 57 einer entsprechenden werkzeugmaschine. Hierzu ist eine Schlingfeder 58 wiederum einstückig mit einem entsprechenden Treibflansch 59 verbunden. Die Schlingfeder 58 und der daran angeordnete Treibflansch 59 dieses Ausfügrungsbeispiels sind wiederum in analoger Weise zu den vorstehend beschriebenen Ausführungsbeispielen der Fig. 1 bis 4 sowie 7 bis 9 ausgebildet.

Der Fräser 56 ist hier mit seinem Schaft vom Treibflansch 59 her vollständig in die Schlingfeder 58 eingeschoben und mit Spannring 26 formschlüssig vorgespannt. Demgegenüber ist der Treibflansch 59 im Bereich seiner kreisringförmigen Stirnfläche 60 mit einer (unteren) Stirnseite 61 an eine kreisringförmige Frässpindel 62 des Fräskopfes 57 verschraubt. Dadurch liegt im vorliegenden Ausführungsbeispiel die Schlingfeder 58 geschützt im Inneren der (hohlen) Frässpindel 62. Alternativ ist es auch denkbar, die Vorrichtung um 180° gedreht mit der Frässpindel 62 zu verschrauben, wodurch die Schlingfeder 58 frei zugänglich an der Unterseite der Drehspindel 62 zu liegen kommt. Diese Anordnung hat den Vorteil, daß die in der Fig. 10 nicht gezeigte Schraube zum Vorspannen des Spannringes 26 leichter zugänglich ist.

Abweichend von den hier beschriebenen Ausführungsbeispielen kann die Vorrichtung auch zum Einspannen anderer Werkzeuge, beispielsweise eines Bohrers, eine Reibahle etc. dienen. Auch beschränkt sich die Vorrichtung nicht nur auf eine Verbindung eines Kettenrades 20 bzw. eines Zahnrades 44 mit einer entsprechenden Welle; vielmehr können auch Flachriemenscheiben, Keilriemenscheiben, Kupplungsteile etc. in entsprechender Weise mit einer Welle verbunden sein.

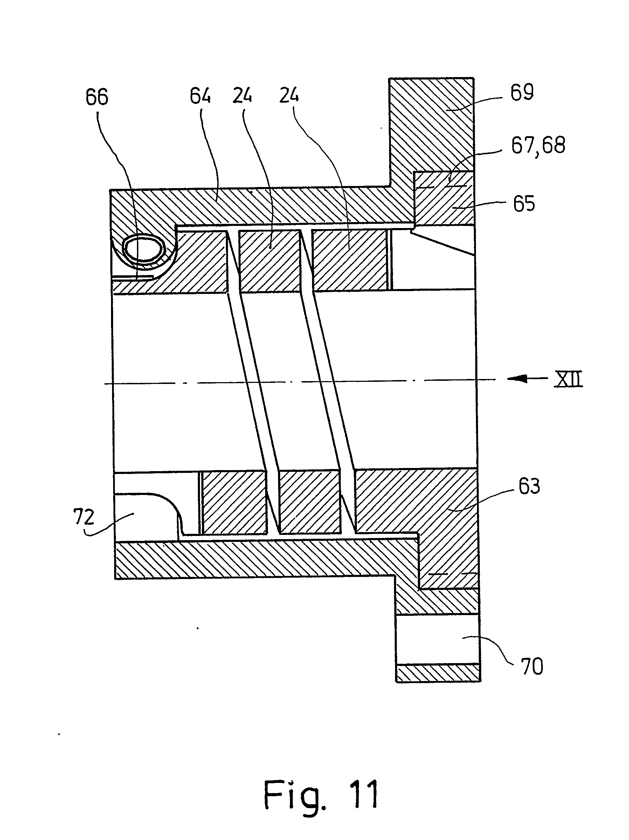

Das in den Fig. 11 bis 13 gezeigte Ausführungsbeispiel der Vorrichtung verfügt über eine Schlingfeder 63, die zum nahezu schlupffreien Übertragen eines Antriebsmomentes in entgegengesetzten Richtungen geeignet ist. Dazu erfolgt ein elastisches Verspannen der Schlingfeder 63 durch ein dieser zugeordnetes Klemmorgan, nämlich eine Klemmhülse 64.

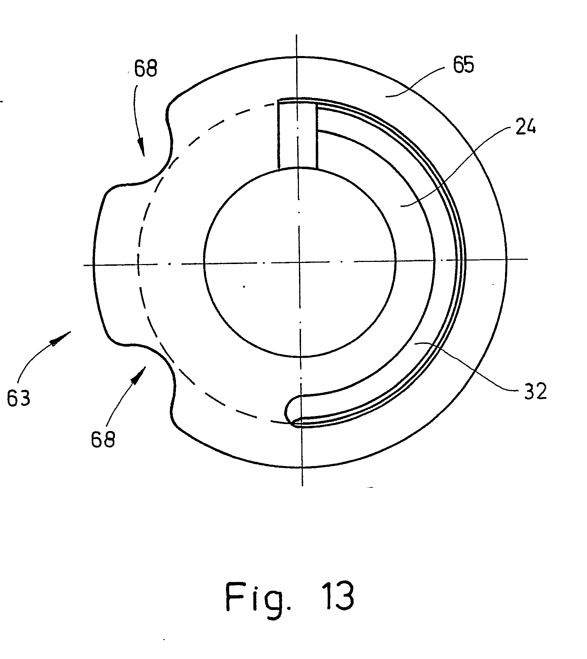

Die Windungen 24 sind bei der Schlingfeder 63 dieses Ausführungsbeispiels wie beim vorstehend beschriebenen (ersten) Ausführungsbeispiel ausgebildet. Auch ist der Treibflansch 65 einstückig mit der Schlingfeder 63 verbunden, wobei gemäß der Fig. 13 die erste halbe Windung 24 der Schlingfeder 63 in den Treibflansch 65 integriert ist durch eine wiederum halbkreisförmige Nut 32 im Treibflansch 65, die die erste halbe Windung 24 der Schlingfeder 63 vom Treibflasch 65 abgrenzt.

Wie der Figur 11 entnommen werden kann, umgibt die Klemmhülse 64 sämtliche Windungen 24 der Schlingfeder 63 vollständig, wozu die Klemmhülse 64 etwa über die Länge der gesamten Schlingfeder 63 verläuft. Die entgegengesetzten Enden der Schlingfeder 63, nämlich ein in der Fig. 11 rechts dargestellter Treibflansch 65 und die gegenüberlie gende freie Stirnwindung 66, sind durch den Klemmring 64 in unverdrehbarer Relativposition zueinander arretiert. Bei dieser Ausführungsform der Vorrichtung dient somit der Treibflansch 65 nicht zur unmittelbaren Aufnahme eines anzutreibenden Zahnrades etc., vielmehr zur Herstellung einer formschlüssigen Verbindung zur Klemmhülse 64.

Diese formschlüssige Arretierung des Treibflansches 65 an der Klemmhülse 64 erfolgt durch mehrere gleichmäßig am Umfang des Treibflansches 65 verteilt angeordnete Erhöhungen 67, die in korrespondierende Ausnehmungen 68 eines Flansches 69 am entsprechen Ende der Klemmhülse 64 eingreifen. Alternativ kann die formschlüssige Verbindung auch durch andere Verbindungsorgane üblicher Art, beispielsweise eine Verzahnung oder ein Mehrkantprofil, gebildet sein. Der Flansch 69 dient zur Befestigung eines nicht gezeigten Kettenrades, Zahnrades oder dgl. Dazu verfügt der Flansch 69 über mehrere mit gleichmäßigem Abstand am Umfang desselben verteilt angeordnete Durchgangsbohrungen 70.

Das dem Flansch 69 gegenüberliegende freie Ende 71 der Klemmhülse 64 ist ebenfalls formschlüssig mit der freien Stirnwindung 66 der Schlingfeder 63 verbunden. Diese formschlüssige Verbindung ist erfindungsgemäß derart einstellbar ausgebildet, daß die freie Stirnwindung 66 in Windungsrichtung gegenüber dem Treibflansch 65 der Schlingfeder 63 verdreht werden kann, wodurch die Schlingfeder 63 mit den übrigen Windungen 24 fest an ein nicht gezeigtes, die Schlingfeder 63 tragendes Bauteil, insbesondere eine Welle oder dgl., anpreßbar ist zur Übertragung eines entsprechenden Drehmomentes in entgegengesetzte Richtung.

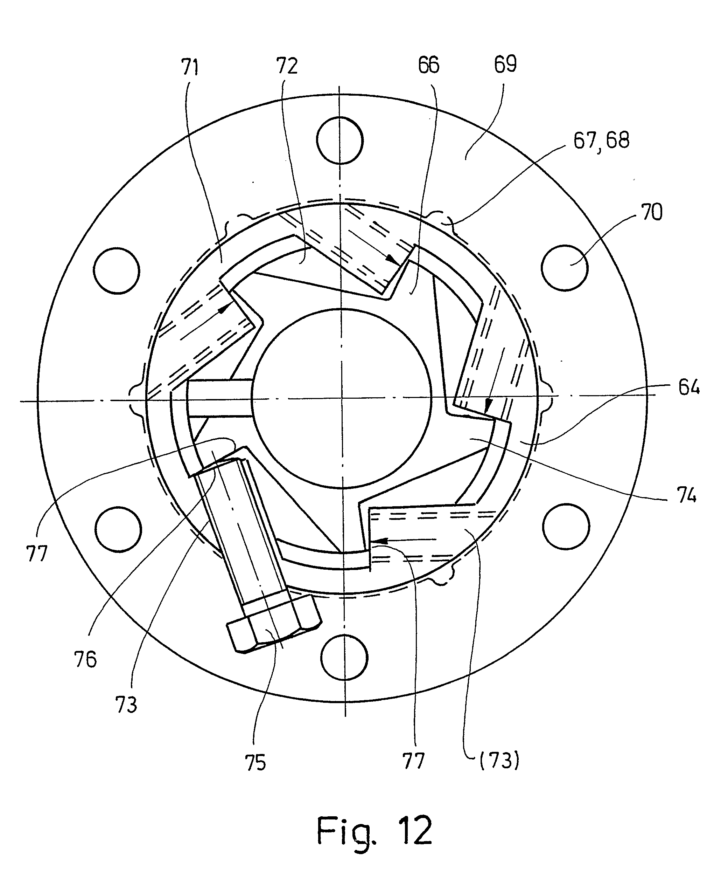

Wie insbesondere der Fig. 12 deutlich entnommen werden kann, ist zur Vorspannung der freien Stirnwindung 66 das freie Ende 71 der Klemmhülse 64 mit gleichmäßig am Umfang verteilten, radialen Ausnehmungen 72 versehen. Die Ausnehmungen 72 sind mit ebenfalls radialen Gewindedurchgangs bohrungen 73 versehen, in die Spannschrauben 75 einschraubbar sind.

Korrespondierend zu den Ausnehmungen 72 im freien Ende 71 der Klemmhülse 64 ist die freie Stirnwindung 66 der Schlingfeder 63 ausgebildet. Diese verfügt demzufolge über flügelartige Nocken 74, die in die Ausnehmungen 72 der Klemmhülse 64 derart eingreifen, daß sie in einem gewissen Umfange zusammen mit der freien. Stirnwandung 66 der Schlingfeder 63 im freien Ende 71 der Klemmhülse 64 verdrehbar sind zum Vorspannung der Schlingfeder 63.

Die Verdrehung der freien Stirnwindung 66 der Schlingfeder 63 erfolgt durch die in die Gewindebohrungen 73 des freien Endes 71 eingesetzten Schrauben 75, von denen in der Fig. 12 eine Schraube 75 andeutungsweise dargestellt ist. Die Schrauben 75 stützen sich dabei mit ihrer Stirnfläche 76 an den Nocken 74 ab, und zwar an entsprechenden Anschlagflächen 77 derselben.

Aufgrund der vorstehenden Lagerung der Schlingfeder 63 in der Klemmhülse 64 dient diese nicht nur zur Vorspannung der gegenüberliegenden Enden der Schlingfeder 63; vielmehr wird die Vorspannung der Schlingfeder 63 durch die Klemmhülse 64 aufrechterhalten, und zwar unabhängig davon, ob ein Antriebsmoment von einer nicht gezeigten Welle oder einem Kettenrad oder dgl. auf die Schlingfeder 63 übertragen wird. Auch bleibt die Vorspannung in Windungsrichtung der Schlingfeder 63 unabhängig von der Drehrichtung der Welle oder eines Kettenrades etc. gleichermaßen erhalten. Dabei ist das zu übertragende Drehmoment zwischen der Schlingfeder 63 und der Welle einerseits sowie einem Kettenrad oder dgl. andererseits in Abhängigkeit vom zu übertragenden Drehmoment einstellbar über die Schrauben 75 im freien Ende 71 der Klemmhülse 64.

Alternativ ist es denkbar, ein Ende der Klemmhülse 64 an der Stelle des Flansches 69 unmittelbar mit einem Zahnrad, Kettenrad etc. zu versehen.

## Ansprüche

1. Vorrichtung zur drehmomentübertragenden Verbindung mehrerer (Maschinen-)Elemente, insbesondere zur reibschlüssigen Drehmomentübertragung zwischen einer Welle bzw. einem Werkzeug oder dgl. und einem Zahnrad bzw. einer Riemenscheibe oder dgl. mit mindestens einem die (Maschinen-)Elemente verbindenden elastischen Spannorgan, **dadurch gekennzeichnet**, daß das Spannorgan über wenigstens eine die Welle (37, 45, 46, 47) oder das Werkzeug (Fräser 56) umgreifende Schlingfeder (21, 34, 41, 48, 58, 63) verfügt.

2. Vorrichtung nach Anspruch 1, dadurch gekennzeichnet, daß jede Schlingfeder (21, 34, 41, 48, 58, 63) über mehrere die Welle (37, 45, 46, 47) oder dgl. vollständig umgebende Windungen (24) verfügt.

3. Vorrichtung nach Anspruch 1 oder 2, dadurch gekennzeichnet, daß eine Ende jeder Schlingfeder (21, 34, 41, 48, 58) mit dem Zahnrad (44) bzw. der Riemenscheibe oder dgl. in Verbindung steht und ein gegenüberliegendes (freies) Ende (25) mit der Welle (37, 45, 46, 47) oder dgl.

bzw. dem Werkzeug (Fräser 56) verspannt ist, insbesondere durch eine spannringförmige Ausbildung der (letzten) Windung (24) am (freien) Ende (25) der Schlingfeder (21, 34, 41, 48, 58).

4. Vorrichtung nach einem oder mehreren der Ansprüche 1 bis 3, dadurch gekennzeichnet, daß eine einzige Schlingfeder (21) einstückig mit dem Zahnrad (44), einem Kettenrad (20) bzw. einer Riemenscheibe oder dgl. verbunden ist.

5. Vorrichtung nach einem oder mehreren der Ansprüche 1 bis 3, dadurch gekennzeichnet, daß eine einzige Schlingfeder (34, 41, 48, 58) mit einem Treibflansch (34, 42, 49, 59) verbunden ist, der das Zahnrad (44), die Riemenscheibe etc. trägt.

6. Vorrichtung nach Anspruch 1 sowie einem oder mehreren der weiteren Ansprüche, dadurch gekennzeichnet, daß die Windungen (24) der Schlingfeder (21, 34, 41, 48, 58) in einer mit dem Kettenrad (20), dem Zahnrad (44) bzw. dem Treibflansch (35, 42, 49, 59) einstückig verbundenen Nabe (22) angeordnet sind, indem die Nabe (22) mit einer umlaufenden, durchgehenden Nut (23) versehen ist.

7. Vorrichtung nach Anspruch 6, dadurch gekennzeichnet, daß der Querschnitt der einzelnen Windungen (24) der Schlingfeder (21, 34, 41, 48, 58) zu dem (freien) Ende (25) hin abnimmt, indem eine zur Bildung der Windungen 24) dienende fortlaufende Nut (23) in der Nabe (22) als Schraubenlinie mit zum (freien) Ende (25) hin abnehmender Steigung ausgebildet ist.

8. Vorrichtung nach Anspruch 6, dadurch gekennzeichnet, daß zumindest ein Teil einer Windung (24) der mit dem Kettenrad (20), dem Zahnrad (44) bzw. dem Treibflansch 35, 42, 49, 59) verbundenen Schlingfeder (21, 34, 41, 48, 58) vom Kettenrad (20), Zahnrad (44) bzw. Treibflansch (35, 42, 49, 59) gebildet ist.

9. Vorrichtung nach Anspruch 8, dadurch gekennzeichnet, daß der im Bereich des Kettenrades (20), des Zahnrades (44) bzw. des Treibflansches (35, 42, 49, 59) sich befindende Teil der Windung (24) der Schlingfeder (21, 34, 41, 48, 58) durch eine längs des (Außen-)Umfangs der Schlingfeder (21, 34, 41, 48, 58) verlaufende bogenförmige, vorzugsweise halbkreisförmige Nut (32) in dem Kettenrad (20), dem Zahnrad (44) oder dem Treibflansch (35, 42, 49, 59) gebildet ist.

10. Vorrichtung nach Anspruch 1 sowie einem oder mehreren der weiteren Ansprüche, dadurch gekennzeichnet, daß entgegengesetzte freie Enden der Schlingfeder (63) durch ein einziges Klemmorgan (Klemmring 64) gegeneinander in Windungsrichtung verspannbar sind.

11. Vorrichtung nach Anspruch 10, dadurch gekennzeichnet, daß das Klemmorgan als eine die Schlingfeder (63) umschließende Klemmhülse (64) ausgebildet ist.

12. Vorrichtung nach Anspruch 11, dadurch gekennzeichnet, daß die Klemmhülse (64) an einem Ende, vorzugsweise an der Seite eines an ihm angeformten Flansches (69), formschlüssig mit einer diesem Ende zugeordneten Endwindung der Schlingfeder (63), insbesondere einem mit der Endwindung vorzugsweise einstückig angebrachten Treibflansch (65), verbunden ist.

13. Vorrichtung nach Anspruch 11 oder 12, dadurch gekennzeichnet, daß ein dem formschlüssig mit der Klemmhülse (64) verbundenen Treibflansch (65) gegenüberliegendes Ende der Schlingfeder (63), insbesondere eine freie Stirnwindung (66), von einem freien Ende (71) der Klemmhülse (64) aus mit einstellbarer Spannkraft verspannbar ist, insbesondere in Windungsrichtung der Schlingfeder (63).

14. Vorrichtung nach Anspruch 12 oder 13, dadurch gekennzeichnet, daß die freie Stirnwindung (66) der Schlingfeder (63) über radiale Nokken (74) verfügt, die mit radialem Spiel in korrespondierende Ausnehmungen (72) im Bereich des freien Endes (71) der Klemmhülse (64) eingreifen.

15. Vorrichtung nach Anspruch 14, dadurch gekennzeichnet, daß die Nocken (74) an der Schlingfeder (63) Anschlagflächen (77) für in die Ausnehmungen (72) der Klemmhülse (64) hineindrehbare Schrauben (75) zum Spannen der Schlingfeder (63) aufweisen.

Fig. 1

Fig. 2

Fig. 3

Fig. 4

Fig. 6

Fig. 7

Fig. 5

EP 0 338 248 A1

Fig. 8

Fig. 9

EP 0 338 248 A1

Fig. 10

Fig. 11

Fig. 12

Fig. 13

**Europäisches Patentamt**

# EUROPÄISCHER RECHERCHENBERICHT

Nummer der Anmeldung

EP 89 10 4612

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 175 473  (LANDRUM) <br> * Insgesamt * | 1-3,10 | F 16 D    1/08 <br> F 16 D   41/20 |
| Y | | 4,6-8 | |
| | --- | | |
| Y | US-A-2 574 714  (SMITH) <br> * Spalten 3,4; Figuren 4-6 * | 4,6-8 | |
| | --- | | |
| X | US-A-3 125 889  (PERRYMAN) <br> * Insgesamt * | 1,2 | |
| | --- | | |
| X | FR-A-  750 068  (MALICET) <br> * Insgesamt * | 1,3,4,6 -8 | |
| Y | | 5 | |
| | --- | | |
| Y | US-A-1 392 363  (SHANNON) <br> * Insgesamt * | 5 | |
| | --- | | |
| X | FR-A-1 148 387  (AUTO-UNION) <br> * Insgesamt * | 1,4-6,8 | |
| | --- | | |
| X | DE-A-3 219 483  (AGFA GEVAERT) <br> * Insgesamt * | 1,3,10- 13 | **RECHERCHIERTE SACHGEBIETE (Int. Cl.4)** |
| A | | 14 | F 16 D    1/00 <br> F 16 D   41/00 <br> F 16 D   13/00 <br> F 16 D   27/00 <br> F 16 D   49/00 |
| | --- | | |
| X | GB-A-1 476 443  (CHANG) <br> * Insgesamt * | 1,3,10- 12 | |
| | --- | | |
| X | US-A-2 638 365  (JONES) <br> * Insgesamt * | 1,3,10, 11,13 | |
| A | | 15 | |
| | --- | | |
| X | DE-C-  129 801  (DIESCHER) <br> * Insgesamt * | 1,3,10, 11 | |
| | ---                              -/- | | |

Der vorliegende Recherchenbericht wurde für alle Patentansprüche erstellt

| Recherchenort | Abschlußdatum der Recherche | Prüfer |
|---|---|---|
| DEN HAAG | 25-07-1989 | BALDWIN D.R. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 525 340 (CURTISS-WRIGHT) * Seiten 8-10; Figuren 4,6 * --- | 1,4,6-8 | |
| X· | FR-A-2 568 335 (DECLIC) * Seiten 4,5; Figur 6 * ----- | 1,4,6,8 | |
| | | | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 25-07-1989 | BALDWIN D.R. |